# EUROPEAN PATENT APPLICATION

(11) **EP 4 475 050 A1**
(43) Date of publication of application: **11.12.2024**
(21) Application number: 24171537.4
(22) Date of filing: 22.04.2024
(51) Int. Cl.: G06Q 10/06, G06F 8/38, G06F 9/451, G06Q 10/0631, G06Q 10/10

(54) **INFORMATION PROCESSING PROGRAM, INFORMATION PROCESSING METHOD, AND INFORMATION PROCESSING DEVICE**

(30) Priority: 07.06.2023 JP 2023094183
(71) Applicant: FUJITSU LIMITED, Kawasaki-shi, Kanagawa 211-8588 (JP)
(72) Inventor: KITAJIMA, Shinya, Kawasaki-shi, Kanagawa, 211-8588 (JP)
(74) Representative: Hoffmann Eitle

(57) **Abstract**

An information processing program causes a computer to execute processing according to a sequence that includes an operation of a user, using an application program interface (API). The processing includes: generating correspondence information in which a predetermined policy, a predetermined variable of a first API to which the predetermined policy is applied in a predetermined sequence, and a second API that specifies a value of the predetermined variable that is selectable by the user are associated with each other; narrowing an execution result of the second API to a value that satisfies the predetermined policy based on the correspondence information in a case where the second API is executed according to the predetermined sequence; and presenting a result narrowed as a selectable value for the predetermined variable to the user.

## Description

### FIELD

The embodiments discussed herein are related to an information processing program, an information processing method, and an information processing device.

### BACKGROUND

In recent years, with promotion of telework or the like, introduction of a mechanism for reducing a face-to-face work such as imprinting on business data as possible in various organizations such as companies and completing business in a digital manner has been promoted.

Typically, as a workflow management system, a technique has been proposed for adding a tag by a keyword extraction technique or the like to each task, setting a constraint such as distribution of information with a specific tag as related information in advance and performing narrowing using the tag so as to determine the related information to be presented to a user.

Japanese Laid-open Patent Publication No. 2011-192078 is disclosed as related art.

### SUMMARY

### TECHNICAL PROBLEM

However, according to the technique for determining the related information to be presented to the user by performing narrowing using the tag, it has been difficult to control a policy, and it has been difficult to improve work efficiency of business.

The disclosed technology has been made in view of the above, and an object is to provide an information processing program, an information processing method, and an information processing device that improve work efficiency of business.

According to an aspect of the embodiments, an information processing program causes a computer to execute processing according to a sequence that includes an operation of a user, using an application program interface (API). The processing includes: generating correspondence information in which a predetermined policy, a predetermined variable of a first API to which the predetermined policy is applied in a predetermined sequence, and a second API that specifies a value of the predetermined variable that is selectable by the user are associated with each other; narrowing an execution result of the second API to a value that satisfies the predetermined policy based on the correspondence information in a case where the second API is executed according to the predetermined sequence; and presenting a result narrowed as a selectable value for the predetermined variable to the user.

### ADVANTAGEOUS EFFECTS OF INVENTION

In one aspect, the embodiments can improve work efficiency of business.

### BRIEF DESCRIPTION OF DRAWINGS

FIG. 1 is a block diagram of an information processing device;
FIG. 2 is a diagram illustrating a flow of forwarding processing of an application to be approved;
FIG. 3 is a diagram illustrating an example of a forwarding screen;
FIG. 4 is a diagram illustrating an example of an API definition;
FIG. 5 is a diagram illustrating an example of processing flow information of a Web application program interface (API);
FIG. 6 is a diagram illustrating an example of a policy setting file;
FIG. 7 is a diagram illustrating an example of a linking table;
FIG. 8 is a diagram illustrating an example of narrowing of an execution result;
FIG. 9 is a diagram illustrating a display example of a search result after narrowing according to a first embodiment;
FIG. 10 is a flowchart of linking processing by an information processing device according to the first embodiment;
FIG. 11 is a flowchart of execution processing of the Web API accompanied by narrowing of the execution result;
FIG. 12 is a diagram illustrating an example of an Identifier (ID) token;
FIG. 13 is a diagram illustrating an example of an attribute selection number table;
FIG. 14 is a diagram illustrating a display example of a search result after narrowing according to a second embodiment; and
FIG. 15 is a hardware configuration diagram of an information processing device.

### DESCRIPTION OF EMBODIMENTS

Hereinafter, embodiments of an information processing program, an information processing method, and an information processing device disclosed in the present application will be described in detail with reference to the drawings. Note that the following embodiments do not limit the information processing program, the information processing method, and the information processing device disclosed in the present application.

### [First Embodiment]

As a mechanism for digitizing business, for example, a technology has been proposed for cryptographically guaranteeing authenticity and a forwarding history of documents when a user forwards a document file using a workflow.

Moreover, it has been studied to perform policy control for workflow processing, by combining such a technology with an open policy agent (OPA). The OPA is a general-purpose policy engine for finding information that violates a set policy and performing a predefined action.

The policy in an organization includes, for example, as follows. One is a policy that a forwarding destination is not a general employee but a manager. Another one is a policy that the manager or a person at a higher position approves when sending a document to another company. Furthermore, still another one is a policy that the manager starts a specific workflow. Moreover, still yet another one is a policy that forwarding of a workflow without an attached file is interrupted.

For example, the OPA operates as a proxy when a Web API is called and determines whether or not the Web API call satisfies the policy. If the policy is satisfied, the OPA allows to call the Web API. If the policy is not satisfied, the OPA does not call the Web API and returns an error. At this time, the OPA can rewrite a parameter, a header, or the like at the time of calling the Web API and transfer them to the Web API. For example, the OPA is defined to extract a user ID from an ID token sent from the user and send the user ID to the Web API. The ID token can include user information such as a user ID and user attribute information such as a supervisor of the user, in addition to general attribute information such as an issuer.

The following cases are considered as the policy control for the workflow processing. For example, a case is considered where it is checked whether or not a forwarding destination when a workflow is forwarded is a supervisor of a forwarding person. Furthermore, a case is considered where it is checked whether an issuer is a senior staff when an application issued by the senior staff is issued. Furthermore, a case is considered where it is checked whether or not an attached file is attached when the attached file is attached to an application. Furthermore, a case is considered where it is checked whether or not a person who has a decision authority such as a president is included in the forwarding destination when a contract is sent to another company. Furthermore, a case is considered where it is checked whether or not a responsible person is included in the forwarding destination, in a case of an application for which approval of the responsible person such as a safety management manager is determined by the law.

However, a specific operation is set by manually inputting, by an administrator or the like, a value indicating what kind of control is performed by the OPA according to the policy. Therefore, although it is possible to impose limitation to each Web API by the OPA according to the policy, it is not easy to input an appropriate value that does not conflict with the limitation. For example, it is possible to perform control by the OPA according to company rules of each company, department, or the like and the laws. However, the OPA has a function for applying merely given limitation, and a part for writing the laws and performing definition in accordance with the rules and for inputting the information is a manual work.

In this regard, as countermeasures on Web browsers, a method for returning an error due to a limitation provided in an input form when the user inputs, or a method for automatically inputting a value into the input form according to a predefined rule are considered. However, in a case of this method, the rule definition in the entire workflow management system and the limitation by the Web browser are not linked, and there is a possibility that a discrepancy occurs in the rules. Therefore, it has been difficult to appropriately perform the policy control for the workflow processing, and it has been difficult to improve work efficiency of business such as an application using a workflow.

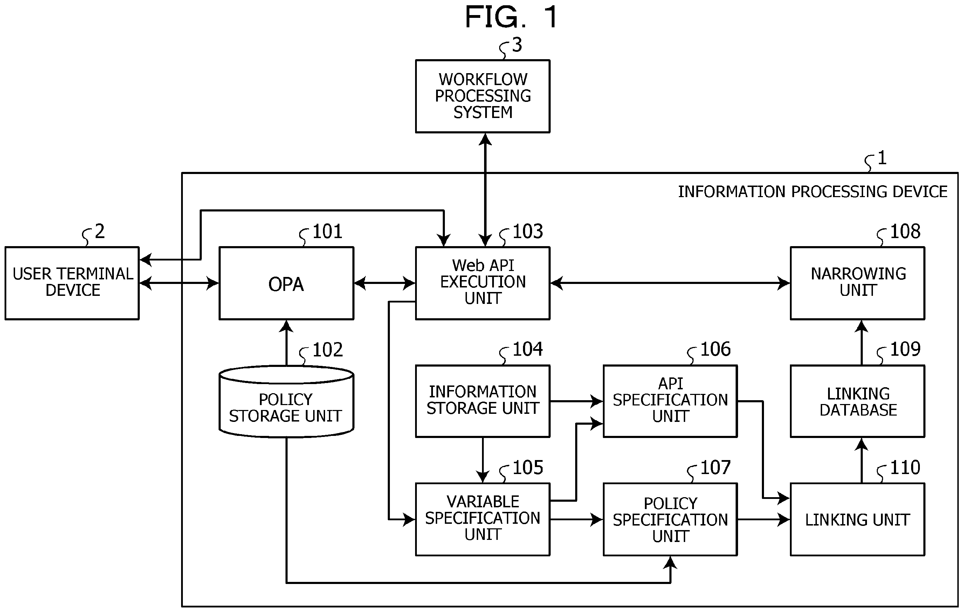

FIG. 1 is a block diagram of an information processing device. An information processing device 1 is coupled to a user terminal device 2 and a workflow processing system 3 via a network.

The user terminal device 2 is a terminal device used by the user who applies an application or the like for seeking an approval using the workflow processing system 3. For example, in a company, the user is an employee or the like, and the user terminal device 2 is an employee's terminal. The user terminal device 2 transmits a search request to the information processing device 1 and receives a response including a search result. Furthermore, the user terminal device 2 transmits a forwarding request of an application form to the information processing device 1 and causes the information processing device 1 to process the application according to a workflow using the workflow processing system 3.

The workflow processing system 3 is a system that executes processing according to a sequence determined in the workflow. For example, the workflow processing system 3 receives the forwarding request of the application form transmitted from the user terminal device 2, sends the application form to an approver designated in the forwarding request, and receives an approval. Thereafter, the workflow processing system 3 returns the approved application form to the user terminal device 2 via the information processing device 1.

The information processing device 1 receives information regarding an operation by the user in the workflow from the user terminal device 2. For example, the information processing device 1 receives an application request or the like in the application forwarding workflow from the user terminal device 2. Then, the information processing device 1 executes processing according a predetermined sequence including the operation by the user, using the Web API. Specifically, the information processing device 1 processes the operation performed by the user according to the set policy using the Web API and causes the workflow processing system 3 to execute the processing according to the sequence.

Hereinafter, details of the information processing device 1 will be described. The information processing device 1 includes an OPA 101, a policy storage unit 102, a Web API execution unit 103, an information storage unit 104, a variable specification unit 105, an API specification unit 106, a policy specification unit 107, a narrowing unit 108, a linking database 109, and a linking unit 110. In the following description, processing in which the user transmits an application form for requesting an approval to the workflow processing system 3 will be described as an example.

The policy storage unit 102 stores a setting file indicating a predetermined policy according to company rules of each company, department, or the like and laws. The policy includes, for example, a policy that a forwarding destination of a specific application form is not a general employee but a manager or a policy that a manager or a person at a higher position approves when a document is sent to another company. In addition, the policy includes a policy that the manager starts a specific workflow or a policy that forwarding of a workflow without an attached file for a specific application is prohibited.

The OPA 101 operates as a proxy in a case where various Web APIs included in the Web API execution unit 103 are called. The OPA 101 has information indicating which policy is applied to calling of a predetermined Web API, in advance. In a case of receiving the calling of the predetermined Web API, the OPA 101 refers to a determined policy stored in the policy storage unit 102 and determines whether or not the Web API calling satisfies the policy. If the policy is satisfied, the OPA 101 allows to call the predetermined Web API. On the other hand, if the policy is not satisfied, the OPA 101 does not call the predetermined Web API and returns an error to the user terminal device 2. Furthermore, the OPA 101 allows to call the Web API, for calling of the Web API for which no policy is provided.

For example, a case will be described where a policy that defines that the forwarding destination of the application is the supervisor of the forwarding person in the specific workflow exists. In that case, the OPA 101 receives a forwarding request of the application in the specific workflow from the user terminal device 2. Next, the OPA 101 specifies a policy to be applied to the forwarding of the application in the specific workflow, from the policy storage unit 102. The OPA 101 confirms a rule such that the forwarding destination is the supervisor of the forwarding person from the specified policy and determines whether or not a forwarding destination of the received forwarding request is the supervisor of the forwarding person. If the forwarding destination is the supervisor, POST that is a request for a forwarding API that operates in the Web API execution unit 103 is permitted.

The Web API execution unit 103 causes a plurality of Web APIs to operate. The Web API includes, for example, a user search API that returns a search result corresponding to a designated condition or a forwarding API used to forward an application according to the workflow.

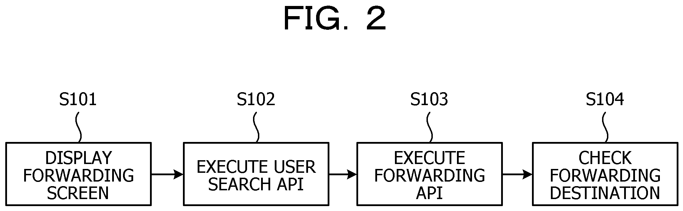

FIG. 2 is a diagram illustrating a flow of the forwarding processing of the application to be approved. An operation of the Web API execution unit 103 in a case where the specific application is forwarded according to the workflow will be described with reference to FIG. 2. Here, a case will be described where the OPA 101 allows to call the Web API. When receiving a forwarding request of the specific application from the user terminal device 2 via the OPA 101, the Web API execution unit 103 displays a forwarding screen on the user terminal device 2 (step S101).

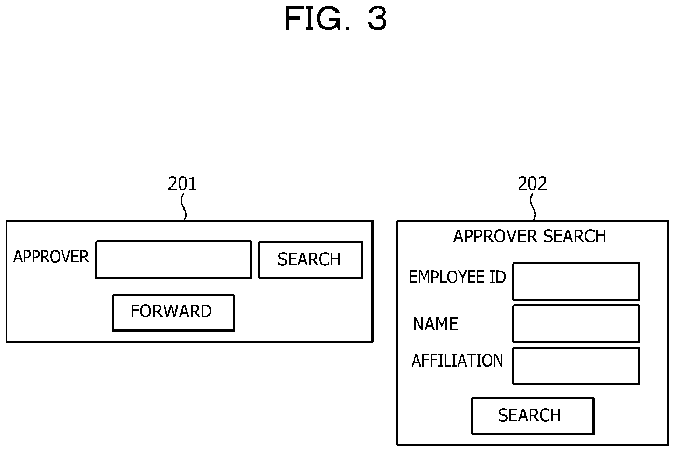

FIG. 3 is a diagram illustrating an example of the forwarding screen. For example, the Web API execution unit 103 displays a forwarding screen 201 illustrated in FIG. 3 on the user terminal device 2. In the forwarding screen 201, a search field and a search button of the approver to be the forwarding destination for receiving an approval and a forwarding button for a forwarding instruction to the approver obtained by the search result are provided. In addition, the Web API execution unit 103 can also use a forwarding screen 202 illustrated in FIG. 3.

The user inputs a search condition on the forwarding screen displayed on the user terminal device 2 and presses the search button. The user terminal device 2 transmits an approver search request according to the search condition to the Web API execution unit 103 via the OPA 101.

Returning to FIG. 2, description is continued. The Web API execution unit 103 receives calling of an inspection API in response to the search request and executes a user search API (step S102). The user search API performs search according to the designated search condition. Next, in the present embodiment, the user search API requests the narrowing unit 108 to narrow the search result according to the policy. Thereafter, the user search API acquires the narrowed search result from the narrowing unit 108. The Web API execution unit 103 displays the narrowed search result on the forwarding screen displayed on the user terminal device 2.

The user selects the approver to be the forwarding destination from the search result in the forwarding screen displayed on the user terminal device 2. Then, the user presses the forwarding button and determines forwarding to the designated forwarding destination. The user terminal device 2 transmits the application forwarding request to the designated forwarding destination to the Web API execution unit 103 via the OPA 101.

The Web API execution unit 103 receives calling of the forwarding API in response to the forwarding request and performs the forwarding API (step S103). The forwarding API starts to execute the forwarding processing to the approver designated as the forwarding destination in the forwarding request.

The forwarding API requests the OPA 101 to confirm whether or not the forwarding destination conforms to the policy. The OPA 101 confirms the policy stored in the policy storage unit 102 and checks whether or not the forwarding destination conforms to the rules of the organization (step S104). When the OPA 101 has confirmed that the forwarding destination has conformed to the rules of the organization, the forwarding API requests the workflow processing system 3 to forward the application for seeking for the approval by the approver designated as the forwarding destination.

The information storage unit 104 stores an API definition (openAPI specification (OAS) v3 or the like) of each Web API included in the Web API execution unit 103. The API definition can be acquired from a specification created by a creator of the Web API or the like. Furthermore, the information storage unit 104 stores processing flow information of the Web API such as a sequence diagram illustrating a flow of processing by each Web API according to the workflow or a source code of an integration test.

The variable specification unit 105 executes processing for specifying a portion using a value selected by the user, of a variable portion of each Web API included in the Web API execution unit 103. Specifically, the variable specification unit 105 specifies the portion using the value selected by the user, by executing the following processing for each Web API included in the Web API execution unit 103.

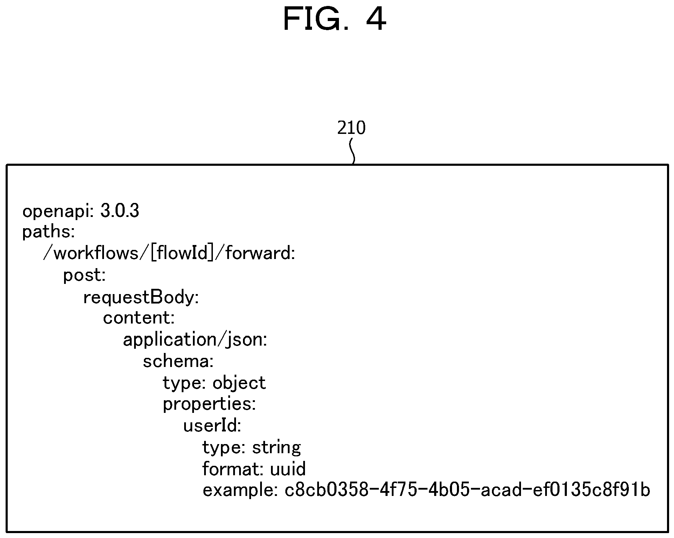

The variable specification unit 105 acquires a list of variables to be POSTed at the time when the Web API is executed, from the API definition of each Web API stored in the information storage unit 104. FIG. 4 is a diagram illustrating an example of the API definition. An API definition 210 is an API definition conforming to the OAS v3. In a case of the OAS v3, variables are listed under properties of each API definition. In the API definition 210, "userId", "type", "format", and "example" are variables. For example, in a case of the API definition 210, the variable specification unit 105 acquires "userId", "type", "format", and "example" as the list of the variables to be POSTed.

Next, the variable specification unit 105 acquires the processing flow information of the Web API such as the sequence diagram or the source code of the integration test stored in the information storage unit 104. Then, the variable specification unit 105 determines whether or not each variable included in the acquired list of the variables is a value input by the user, from the acquired processing flow information of the Web API. Then, the variable specification unit 105 holds information regarding the variable of which the value is input by the user.

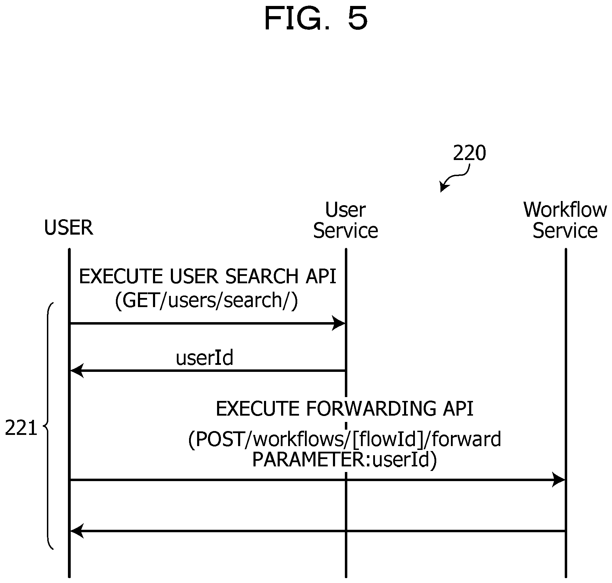

FIG. 5 is a diagram illustrating an example of the processing flow information of the Web API. For example, the variable specification unit 105 acquires a sequence 220 illustrated in FIG. 5. Then, the variable specification unit 105 refers to processing 221 in the sequence 220 and confirms that userId is selected by the user and a value thereof is used as an input to the next forwarding API. As a result, the variable specification unit 105 determines that the variable called userId is a value used by the user. Hereinafter, the variable, of which the value is input by the user, specified by the variable specification unit 105 is referred to as a "user input variable". This forwarding API corresponds to an example of a "first API", and the user input variable corresponds to an example of a "predetermined variable". Furthermore, the sequence 220 illustrated in FIG. 5 corresponds to an example of a "predetermined sequence".

The policy specification unit 107 acquires information regarding the user input variable. Then, the policy specification unit 107 refers to the setting file stored in the policy storage unit 102 and specifies a policy for each user input variable.

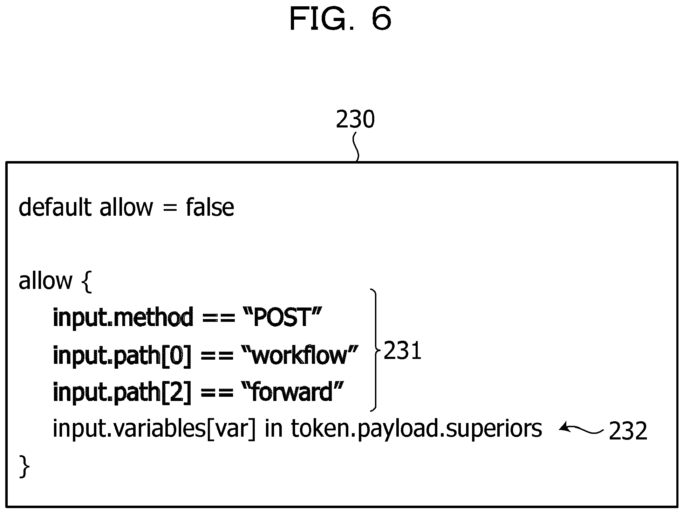

For example, the variable called userId in FIG. 5 will be described. The variable userId in a post method for a forwarding API of /workflows/[folowId]/forward is specified as the user input variable. Therefore, the policy specification unit 107 confirms whether or not a policy for the post method for the forwarding API /workflows/[folowId]/forward exists in the policy storage unit 102. FIG. 6 is a diagram illustrating an example of the policy setting file. In a setting file 230 illustrated in FIG. 6, a policy used to call in what format is defined. In this case, since a calling format of userId indicated by a row 231 in the setting file 230 is positioned at a calling format of the forwarding API /workflows/[folowId]/forward, the policy specification unit 107 specifies that a policy defined by the setting file 230 is the policy for the post method for the forwarding API /workflows/[folowId]/forward. Then, the policy specification unit 107 specifies that a rule indicated in a row 232 in the setting file 230 is a policy for the variable userId in the post method for the forwarding API /workflows/[folowId]/forward. The policy defined in the setting file 230 corresponds to an example of a "predetermined policy".

The API specification unit 106 acquires the information regarding the user input variable. Furthermore, the API specification unit 106 acquires the processing flow information of the Web API such as the sequence diagram or the source code of the integration test stored in the information storage unit 104. Then, the API specification unit 106 extracts a Web API used when the user selects the value of the user input variable from each Web API included in the Web API execution unit 103 and specifies the extracted Web API as an input API of the user input variable.

For example, the API specification unit 106 acquires userId that is the variable in the post method for the forwarding API /workflows/[folowId]/forward, as the user input variable. Furthermore, the API specification unit 106 acquires the sequence 220 illustrated in FIG. 5. Then, the API specification unit 106 specifies the user search API called /users/search/ as the Web API used by the user when the value of userId that is the variable in the post method for the forwarding API that is /workflows/[folowId]/forward is selected, as an input API. This user search API corresponds to an example of a "second API".

The linking unit 110 links the policy for the user input variable specified by the policy specification unit 107 and the input API of the user input variable specified by the API specification unit 106.

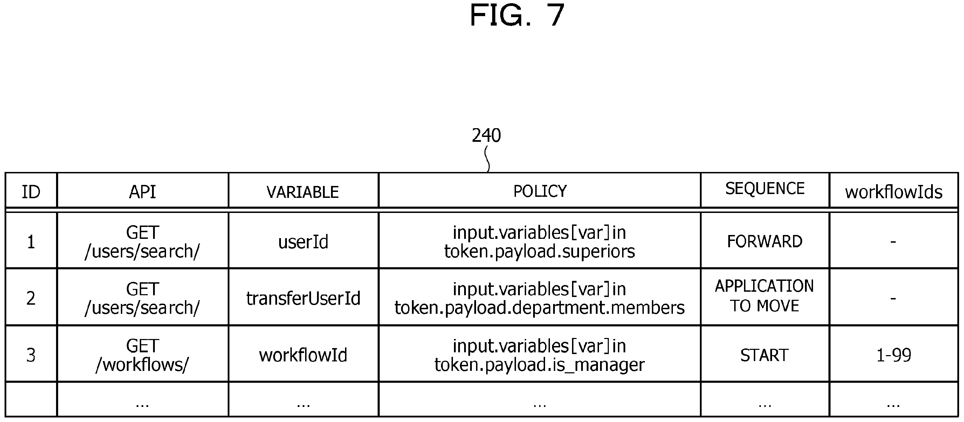

FIG. 7 is a diagram illustrating an example of a linking table. For example, the linking database 109 includes a linking table 240 illustrated in FIG. 7. In the linking table 240, information used to specify the input API of the user input variable, the user input variable, the policy corresponding to the user input variable, information regarding a sequence for performing the input API to which the policy is applied, and information regarding the workflow can be registered.

For example, the linking unit 110 receives an input of the user input variable and information regarding the policy for the user input variable from the policy specification unit 107. Then, the linking unit 110 registers the acquired user input variable and information regarding the policy for the user input variable in the linking table 240 stored in the linking database 109. As a result, the linking unit 110 links and records the user input variable and the policy for the user input variable.

Furthermore, the linking unit 110 receives an input of the user input variable and information regarding the input API of the user input variable from the API specification unit 106. Then, the linking unit 110 registers the information regarding the input API of the user input variable in a row that has been already registered and of which the user input variable matches, in the linking table 240 stored in the linking database 109. As a result, the linking unit 110 links the information regarding the input API of the user input variable to the user input variable and the policy for the user input variable and records the information.

Moreover, in a case where the application of the policy to the specific workflow is limited, the linking unit 110 registers information regarding the specific workflow in the linking table 240 stored in the linking database 109. As a result, the linking unit 110 links the specific workflow to the user input variable as a condition.

The narrowing unit 108 receives an input of the execution result executed by each Web API from the Web API execution unit 103 together with information regarding the executing Web API, the sequence being executed, and the workflow. Then, the narrowing unit 108 confirms whether or not the user input variable linked to the Web API executed in the designated sequence as the input API exists in the linking database 109. Here, if there is no user input variable using the Web API executed in the designated sequence as the input API, the narrowing unit 108 returns a notification indicating no narrowing to the Web API execution unit 103.

On the other hand, in a case where the user input variable using the Web API executed in the designated sequence as the input API exists, the narrowing unit 108 acquires the policy for the user input variable from the linking database 109. Here, the narrowing unit 108 confirms the information regarding the specific workflow linked as a condition, and if the workflow being executed is not included in the specific workflow, the narrowing unit 108 returns the notification indicating no narrowing to the Web API execution unit 103.

On the other hand, in a case where there is no workflow condition or the workflow condition is satisfied, the narrowing unit 108 narrows the execution result according to the acquired policy. Thereafter, the narrowing unit 108 outputs the narrowed execution result to the Web API execution unit 103.

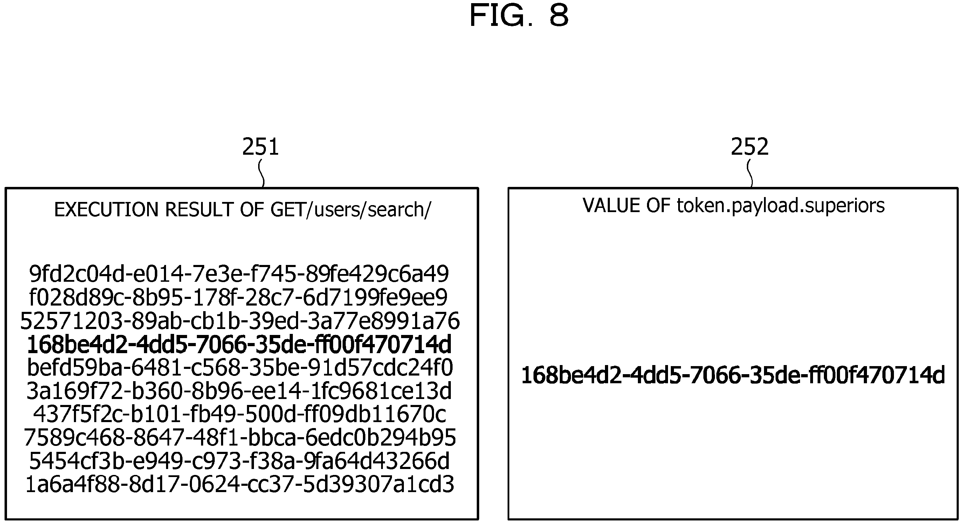

FIG. 8 is a diagram illustrating an example of narrowing of the execution result. For example, narrowing of the search result by the user search API called /users/search/ will be described. The narrowing unit 108 acquires a search result 251 as the execution result of the user search API called /users/search/. Information described in the search result 251 is universal unique identifier (UUID) that is identification information of a person. Furthermore, the narrowing unit 108 acquires /users/search/ as information regarding the executed Web API and acquires forwarding as information regarding the sequence.

Next, the narrowing unit 108 refers to a linking table 24 illustrated in FIG. 7 and specifies that the user input variable to which the user search API called /users/search/ in a case where the sequence is forwarding is linked as the input API, as userId. Then, the narrowing unit 108 narrows the information regarding the search result 251 to information that matches token.payload.superiors, that is, a person who is the supervisor of the user. Here, in a case of an organization, by the narrowing unit 108, information in which the UUID and an attribute of the employee are registered may be held and narrowing may be performed using the information, and external information such as an employee database may be used.

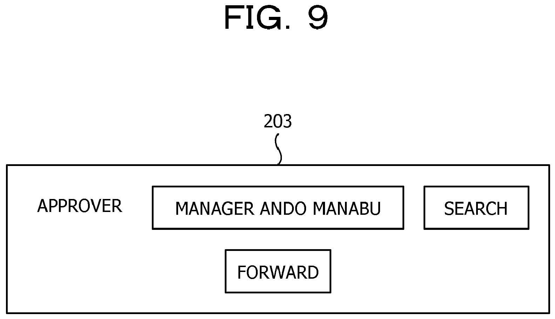

For example, in a case where there is one supervisor of the user, the narrowing unit 108 acquires a narrowing result 252. Then, the narrowing unit 108 transmits the narrowing result 252 to the Web API execution unit 103 and displays the narrowing result 252 on the user terminal device 2. FIG. 9 is a diagram illustrating a display example of the search result after narrowing according to the first embodiment. For example, in a case where the approver is requested to be the supervisor in the search of the approver and the number of supervisors of the user is one, the user terminal device 2 displays a forwarding screen 203 illustrated in FIG. 9 in a state where the single approver is selected by the Web API execution unit 103. In a case where the number of search results is one in this way, the single search result that has been automatically narrowed may be selected.

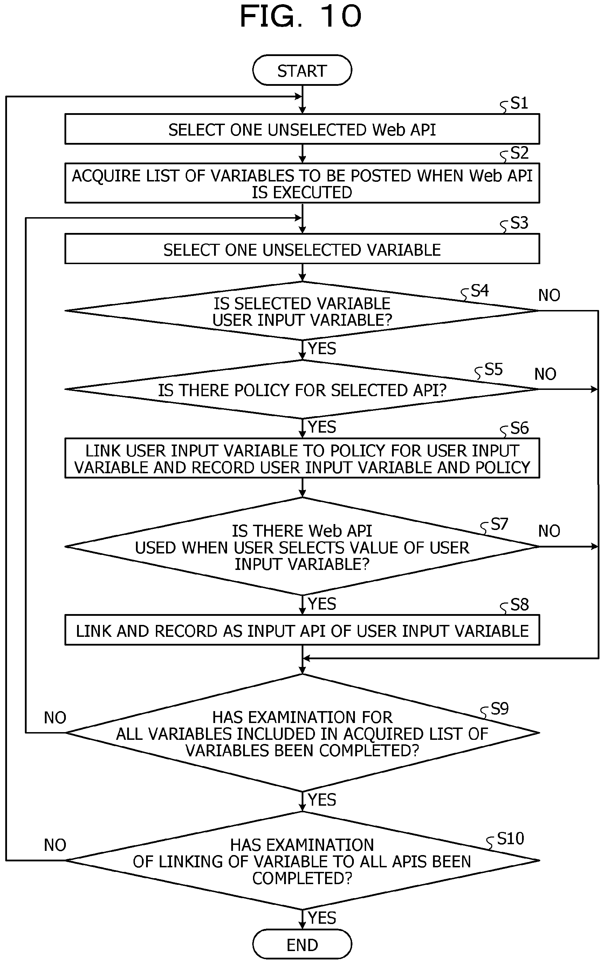

FIG. 10 is a flowchart of the linking processing by the information processing device according to the first embodiment. Next, a flow of the linking processing by the information processing device 1 according to the first embodiment will be described with reference to FIG. 10.

The variable specification unit 105 selects one Web API from among unselected Web APIs of the Web APIs included in the Web API execution unit 103 (step S1).

Next, the variable specification unit 105 acquires an API definition of the selected Web API from the information storage unit 104. Then, the variable specification unit 105 acquires a list of variables to be POSTed when the selected Web API is executed, based on the API definition (step S2).

Next, the variable specification unit 105 selects one unselected variable from the acquired list of the variables (step S3).

Next, the variable specification unit 105 acquires the processing flow information of the Web API such as the sequence diagram or the source code of the integration test from the information storage unit 104. Then, the variable specification unit 105 determines whether or not the variable selected from the processing flow information of the Web API is the value input by the user and is the user input variable (step S4). In a case where the selected variable is not the user input variable (step S4: No), the linking processing proceeds to step S9.

On the other hand, in a case where the selected variable is the user input variable (step S4: Yes), the policy specification unit 107 acquires information regarding the selected API and information regarding the user input variable from the variable specification unit 105. Then, the policy specification unit 107 refers to the setting file stored in the policy storage unit 102 and determines whether or not there is a policy corresponding to the selected API (step S5). In a case where there is no policy corresponding to the selected API (step S5: No), the linking processing proceeds to step S9.

On the other hand, in a case where the policy corresponding to the selected API exists (step S5: Yes), the policy specification unit 107 extracts the policy corresponding to the user input variable, from the policy corresponding to the selected API. Then, the policy specification unit 107 links the user input variable to the extracted policy and records the user input variable and the policy in the linking database 109 (step S6).

The API specification unit 106 acquires the information regarding the selected API and the information regarding the user input variable from the variable specification unit 105. Furthermore, the API specification unit 106 acquires the processing flow information of the Web API such as the sequence diagram or the source code of the integration test from the information storage unit 104. Then, the API specification unit 106 determines whether or not there is the Web API used when the user selects the value of the user input variable, using the processing flow information of the Web API (step S7). In a case where there is no Web API used when the user selects the value of the user input variable (step S7: No), the linking processing proceeds to step S9.

On the other hand, in a case where there is the Web API used when the user selects the value of the user input variable (step S7: Yes), the API specification unit 106 specifies the Web API used when the user selects the value of the user input variable as the input API of the user input variable. Then, the API specification unit 106 links the input API to the user input variable and records the input API and the user input variable in the linking database 109 (step S8).

The variable specification unit 105 determines whether or not examination of linking has been completed for all the variables included in the acquired list of the variables (step S9). In a case where a variable for which linking has not been examined remains (step S9: No), the linking processing returns to step S3.

On the other hand, in a case where the examination of the linking has been completed for all the variables included in the acquired list of the variables (step S9: Yes), the variable specification unit 105 determines whether or not examination of linking of the variable to all the Web APIs included in the Web API execution unit 103 has been completed (step S10).

In a case where the Web API for which linking of the variable has not been examined remains (step S10: No), the linking processing returns to step S1. On the other hand, in a case where the examination of the linking of the variable to all the Web APIs included in the Web API execution unit 103 has been completed (step S10: Yes), the linking processing ends.

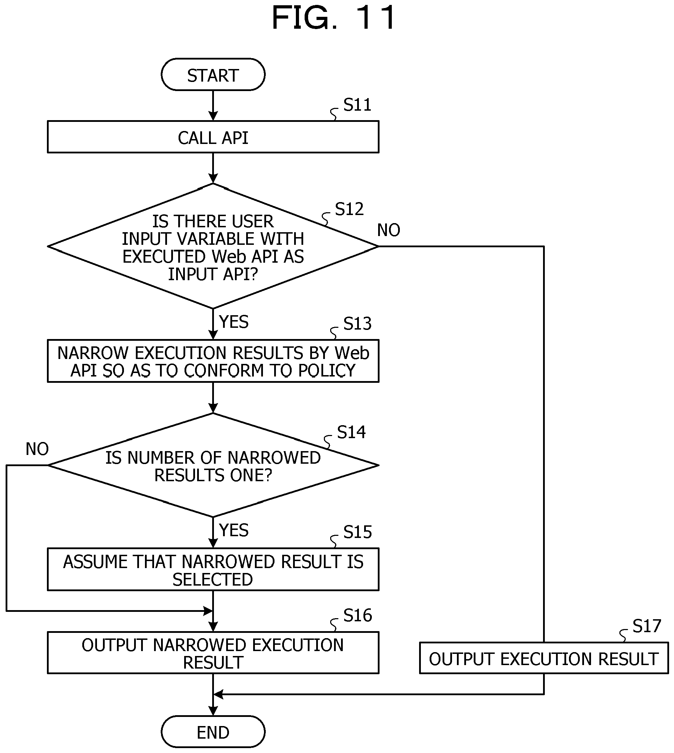

FIG. 11 is a flowchart of execution processing of the Web API accompanied by narrowing of the execution result. Next, a flow of the execution processing of the Web API accompanied by the narrowing of the execution result will be described with reference to FIG. 11. Here, a case will be described where there is no workflow condition and the user input variable is used.

The Web API execution unit 103 receives API calling performed by the user terminal device 2 via the OPA 101 (step S11). Then, the Web API execution unit 103 executes the called Web API.

The narrowing unit 108 refers to the information stored in the linking database 109 and determines whether or not there is the user input variable with the executed Web API as the input API (step S12).

In a case where there is no user input variable with the executed Web API as the input API (step S12: No), the narrowing unit 108 returns the notification indicating no narrowing to the Web API execution unit 103. The Web API execution unit 103 outputs the execution result to the user terminal device 2 (step S17). Thereafter, the execution processing of the Web API ends.

On the other hand, in a case where there is the user input variable with the executed Web API as the input API (step S12: Yes), the narrowing unit 108 acquires the policy for the user input variable from the linking database 109. Then, the narrowing unit 108 narrows the execution result by the Web API so as to conform to the acquired policy (step S13).

Next, the narrowing unit 108 determines whether or not the number of narrowing results is one (step S14). In a case where the number of narrowing results is plural (step S14: No), the execution processing of the Web API proceeds to step S16.

On the other hand, in a case where the number of narrowing results is one (step S14: Yes), the narrowing unit 108 assumes that the narrowing result is selected by the user (step S15).

Thereafter, the narrowing unit 108 outputs the narrowed execution result to the user terminal device 2 (step S16).

As described above, the information processing device according to the present embodiment specifies the user input variable of which the value is given by the input from the user, among the variables used for the Web API. Next, the information processing device specifies the policy corresponding to the user input variable and the input API, links them to the user input variable, and records them in the linking database. Then, in a case where the Web API is executed, in a case where there is the user input variable with the executed Web API as the input API, the information processing device narrows the execution result of the Web API according to the policy for the user input variable and provides the execution result to the user.

As a result, it is possible to automatically narrow the execution result used to select the value of the variable by the user according to the policy, and the user can select the value of the variable from the information according to the policy. That is, the user can easily input data that does not cause inconsistency with the policy created based on the company rules and the laws. Furthermore, in a case where the policy is changed, it is possible to automatically update the policy corresponding to the user input variable. As a result, it is possible to cause the narrowing processing to automatically follow the change of the policy, and it can make it easier to follow the policy change. Therefore, it is possible to improve work efficiency of business using the workflow.

### [Second Embodiment]

Next, a second embodiment will be described. An information processing device 1 according to the present embodiment is illustrated as the block diagram in FIG. 1. The information processing device 1 according to the present embodiment sorts narrowed execution results in order of expectation that a user is likely to use the execution result and provides the narrowed execution results to the user. Next, sorting of the execution result by the information processing device 1 according to the present embodiment will be described. In the following description, description of an operation similar to the operation of each unit in the first embodiment is omitted.

A narrowing unit 108 acquires a value selected from the narrowed execution results from a Web API execution unit 103 together with an ID token of the user who has performed the selection. The ID token is newly generated each time when the user logs in and is transmitted to a user terminal device 2. Specifically, the ID token is generated by a program (authentication infrastructure) that manages IDs or the like in the information processing device 1. Next, the narrowing unit 108 acquires information regarding an attribute including the selected value from the ID token. Then, the narrowing unit 108 records the number of times when the acquired attribute is selected, in association with an input API stored in a linking database 109.

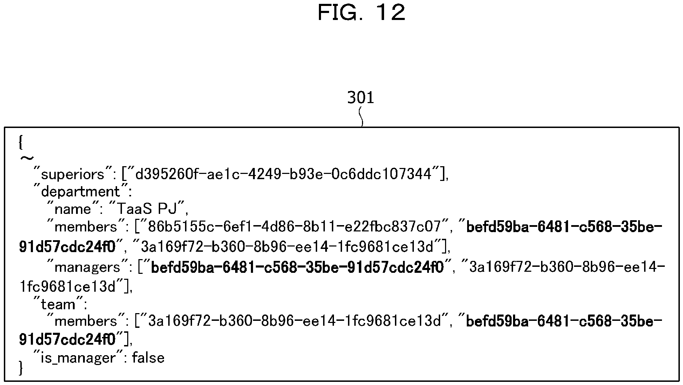

FIG. 12 is a diagram illustrating an example of the ID token. For example, a case will be described where execution results by an input API, to which an ID 1 of a linking table 240 in FIG. 7 is given, are narrowed. The narrowing unit 108 acquires an ID token 301 in FIG. 12 as the ID token of the user who has performed the selection. Furthermore, the narrowing unit 108 acquires "befd59ba-6481-c568-35be-91d57cdc24f0" as the value selected by the user.

The ID token 301 includes information regarding supervisors (superiors) of the user, and a department (department) and a team (team) to which the user belongs. The narrowing unit 108 can confirm from the ID token 301 that a person represented by befd59ba-6481-c568-35be-91d57cdc24f0 is a member and a manager of the department to which the user belongs, and in addition, the narrowing unit 108 can confirm that a person represented by befd59ba-6481-c568-35be-91d57cdc24f0 is a member of the team to which the user belongs.

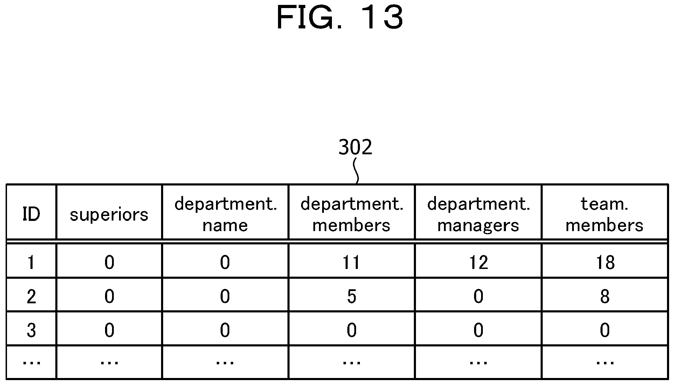

FIG. 13 is a diagram illustrating an example of an attribute selection number table. The narrowing unit 108 stores an attribute selection number table 302 illustrated in FIG. 13 in the linking database 109, in association with the linking table 240 in FIG. 7 in which narrowing has been performed. Here, an ID in the attribute selection number table 302 matches the ID in the linking table 240 in FIG. 7. The narrowing unit 108 registers the number of times when each attribute is selected in the attribute selection number table 302.

For example, as described above, a case will be described where a person who is a member and a manager of a department to which the user belongs and is a member of a team to which the user belongs is selected from the execution results of the input API with the ID 1. In this case, the narrowing unit 108 increments the numbers of department.members, department.managers, and team.members in a row of the ID 1 in the attribute selection number table 302 by one. Team.members represents a member of a department to which the user belongs, department.managers represents a manager of the department to which the user belongs, and team.members represents a member of a team to which the user belongs. The narrowing unit 108 can record the number of times when each attribute is selected, by updating the attribute selection number table 302 each time when the Web API is executed.

Then, after narrowing the execution results of the Web API, the narrowing unit 108 acquires the number of times when each attribute is selected, corresponding to the user input variable used for narrowing, from the linking database 109. Then, the narrowing unit 108 sorts the execution results narrowed in order of values included in the attribute with a higher use frequency.

For example, in a case of narrowing of execution results of an input API with an ID 2 in the attribute selection number table 302 in FIG. 13, the narrowing unit 108 sorts the narrowing results so that information that matches a value existing in the list of team.members in the ID token of the user is ranked high. Furthermore, in a case where a plurality of attributes exists, the narrowing unit 108 sorts the narrowing results so that information included in as many attributes as possible is ranked to be high in descending order of values. Furthermore, in a case where the use frequencies of the attributes are the same, the narrowing unit 108 sorts the narrowing results in ascending order of the values included in the attribute in the ID token of the user. As a result, the narrowing unit 108 can prioritize the attribute that can be further narrowed.

Thereafter, the narrowing unit 108 outputs the sorted narrowing result to the Web API execution unit 103. As a result, the sorted narrowing result is displayed on the user terminal device 2, and the user can confirm the value used for the user input variable in descending order of the use frequency.

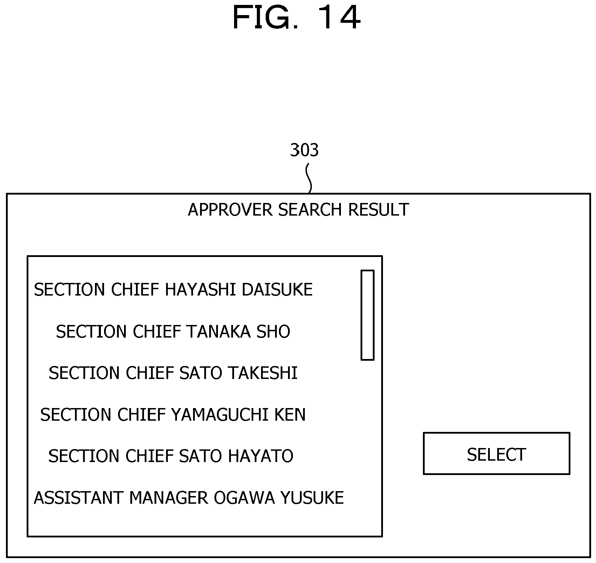

FIG. 14 is a diagram illustrating a display example of a search result after narrowing according to the second embodiment. For example, the user terminal device 2 displays a forwarding screen 303 illustrated in FIG. 14 in which a manager in the same team is preferentially displayed in an upper order of the search result.

As described above, the information processing device according to the present embodiment sorts the narrowing results according to the use frequency of the attribute included in each value and provides the narrowing result to the user. As a result, the user can easily find a value that is likely to be selected, and it is possible to improve work efficiency.

### (Hardware Configuration)

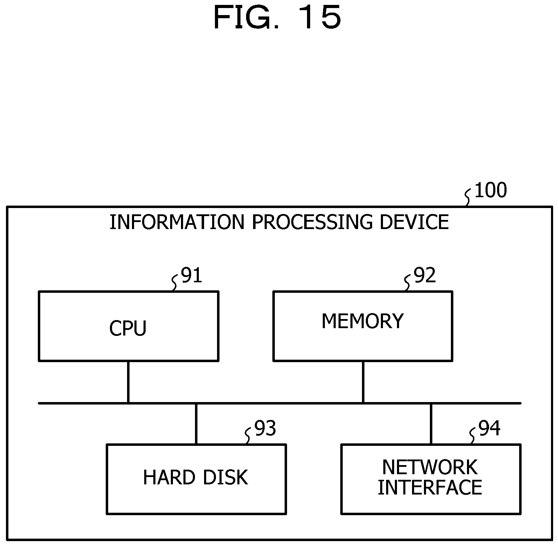

FIG. 15 is a hardware configuration diagram of the information processing device. Next, an example of a hardware configuration for implementing each function of the information processing device 1 will be described with reference to FIG. 15.

As illustrated in FIG. 15, the information processing device 1 includes, for example, a central processing unit (CPU) 91, a memory 92, a hard disk 93, and a network interface 94. The CPU 91 is coupled to the memory 92, the hard disk 93, and the network interface 94 via a bus.

The network interface 94 is an interface for communication between the information processing device 1 and an external device. The network interface 94 relays communication between the user terminal device 2, the workflow processing system 3, and the CPU 91, for example.

The hard disk 93 is an auxiliary storage device. The hard disk 93 implements the functions of the policy storage unit 102 and the linking database 109 illustrated in FIG. 1. Furthermore, the hard disk 93 stores a program for implementing the functions of the OPA 101, the policy storage unit 102, the Web API 103, the information storage unit 104, the variable specification unit 105, the API specification unit 106, the policy specification unit 107, the narrowing unit 108, the linking database 109, and the linking unit 110 illustrated in FIG. 1.

The memory 92 is a main storage device. For example, a dynamic random access memory (DRAM) may be used as the memory 92.

The CPU 91 reads various programs from the hard disk 93, and loads them in the memory 92 to execute the programs. As a result, the CPU 91 implements the functions of the OPA 101, the policy storage unit 102, the Web API 103, the information storage unit 104, the variable specification unit 105, the API specification unit 106, the policy specification unit 107, the narrowing unit 108, the linking database 109, and the linking unit 110 illustrated in FIG. 1.

## Claims

1. An information processing program for causing a computer to execute processing according to a sequence that includes an operation of a user, using an application program interface (API), the processing comprising:
generating correspondence information in which a predetermined policy, a predetermined variable of a first API to which the predetermined policy is applied in a predetermined sequence, and a second API that specifies a value of the predetermined variable that is selectable by the user are associated with each other;
narrowing an execution result of the second API to a value that satisfies the predetermined policy based on the correspondence information in a case where the second API is executed according to the predetermined sequence; and
presenting a result narrowed as a selectable value for the predetermined variable to the user.

2. The information processing program according to claim 1, wherein
the processing of generating the correspondence information includes
extracting a variable in the first API, based on an API definition of the first API,
specifying the predetermined policy to be applied to the predetermined variable from among a plurality of policies, based on setting information of each of the plurality of policies registered in advance,
specifying the second API based on information regarding the predetermined sequence, and
generating the correspondence information in association with the specified predetermined policy, the predetermined variable, and the specified second API.

3. The information processing program according to claim 1, wherein
the processing of presenting the narrowed result to the user includes,
in a case where the execution result is narrowed to one specific value, assuming that the specific value is selected by the user and generating information to be presented to the user.

4. The information processing program according to claim 1, wherein
the processing of presenting the narrowed result to the user includes,
in a case where the execution result is narrowed to a plurality of values, acquiring attribute information of each of the plurality of values, sorting the plurality of values in order of the included attribute information with a higher frequency to be selected, and presenting the values to the user.

5. An information processing method comprising:
generating, by an information processing apparatus which executes processing according to a sequence that includes an operation of a user using an application program interface (API), correspondence information in which a predetermined policy, a predetermined variable of a first API to which the predetermined policy is applied in a predetermined sequence, and a second API that specifies a value of the predetermined variable that is selectable by the user are associated with each other;
narrowing an execution result of the second API to a value that satisfies the predetermined policy based on the correspondence information in a case where the second API is executed according to the predetermined sequence; and
presenting a result narrowed as a selectable value for the predetermined variable to the user.

6. An information processing device comprising:
an execution unit configured to execute processing according to a sequence that include an operation of a user using an application program interface (API);
a linking unit configured to generate correspondence information in which a predetermined policy, a predetermined variable of a first API to which the predetermined policy is applied in a predetermined sequence, and a second API that specifies a value of the predetermined variable that is selectable by the user are associated with each other; and
a narrowing unit configured to narrow an execution result of the second API to a value that satisfies the predetermined policy based on the correspondence information in a case where the second API is executed according to the predetermined sequence and present a result narrowed as a selectable value for the predetermined variable to the user.
